# EUROPÄISCHE PATENTSCHRIFT

(11) **EP 1 342 605 B1**
(45) Veröffentlichungstag und Bekanntmachung des Hinweises auf die Patenterteilung: **26.07.2006**
(21) Anmeldenummer: 02020373.3
(22) Anmeldetag: 12.09.2002
(51) Int. Cl.: B60K 37/02, B60R 16/02

(54) **Vorrichtung zur Steuerung einer Bildschirmanzeige**
Device for controlling a screen display
Dispositif de commande d'écran de visualisation

(30) Priorität: 04.03.2002 EP 02004845
(43) Veröffentlichungstag der Anmeldung: 10.09.2003
(73) Patentinhaber: Ford Global Technologies, LLC., Dearborn MI 48126 (US)
(72) Erfinder: Schmitz, Stephan, 50672 Köln (DE); Knopke, Andreas, 41542 Dormagen (DE); Becker, Stefan, 51503 Rösrath (DE)
(74) Vertreter: Drömer, Hans-Carsten

(56) Entgegenhaltungen:
- DE-A- 19 740 575
- FR-A- 2 808 915
- US-B1- 6 240 347

## Beschreibung

Die Erfindung bezieht sich auf eine Vorrichtung zur Steuerung einer Bildschirmanzeige, insb. für ein Kraftfahrzeug, zur Auswahl von Menüpunkten, mit Mitteln zur sprachgesteuerten Betätigung und mit Mitteln zur manuellen Betätigung sowie mit zumindest einem Bildschirm mit einem Analoginstrumentenbereich und mit einer Bildschirmanzeige für die Menüführung, wobei die Bildschirmanzeige für die Menüführung mit den Mitteln zur sprachgesteuerten Betätigung und/oder den Mitteln zur manuellen Betätigung gesteuert werden kann.

Aus dem Stand der Technik sind verschiedene Vorrichtungen zur Steuerung einer Bildschirmanzeige, insb. für ein Kraftfahrzeug, der gattungsgemäßen Art bekannt. Die bekannten Anordnungen dienen dabei alle im wesentlichen dazu, die sich durch die Integration von z.B. Multimediasystemen im Automobil ergebenden neuen Anforderungen, die sich insb. auf die Integration einer Vielzahl von Funktionen, die dem Fahrer die Fahraufgabe erleichtern sollen, beziehen, gerecht zu werden. Es impliziert dabei insb. die Bedienung eines solchen Multimediasystemes je nach Auslegung der Mensch- Maschine- Schnittstelle ein nicht unerhebliches Ablenkungspotential mit entsprechenden Konsequenzen für die Fahrsicherheit. Diese Ablenkung resultiert auch insb. aus den für die Bedienung notwendigen Blickzuwendungen und manuellen Bedienoperatonen.

Aus der JP10274541 ist eine gattungsbildende Vorrichtung bekannt. Mittels eines in verschiedene Richtungen beweglichen Bedienhebels, der mehrere Schalter und Drehknöpfe aufweist, können auf einem Bildschirm verschiedenste Menüs angewählt und unter den Menüpunkten entsprechende Fahrzeugfunktionen ausgewählt und gesteuert werden. Solche Fahrzeugfunktionen sind unter anderem die Bedienung von Klimaanlage, Navigationssystem, Radio und CD-Spieler. Dabei erfolgt die Steuerung der Bildschirmmarkierung, das kann z. B. die Bewegung eines Zeigers auf dem Bildschirm sein, oder die Bewegung eines optisch hervorgehobenen Bereiches auf dem Bildschirm, mittels eines Schiebeschalters, während durch die Bewegung des Bedienhebels selbst die Auswahl des markierten Menüs bzw. Funktion erfolgt. Die möglichen Bewegungen des Bedienhebels sind dabei die Drehung des Bedienhebels um seinen Aufhängepunkt, daraus resultieren Verschiebungen quer zu seiner Längsachse, z. B. Hoch-Runter, Vor-Zurück, weiterhin die Drehung des Bedienhebels um seine eigene Längsachse, und die Verschiebung in Richtung seiner Längsachse. Je nach zu steuernder Funktion kann dabei jeder Bewegung eine bestimmte Steuer- und oder Auswahlfunktion zugeordnet werden. Der Bedienhebel kann sowohl am Lenkstock als auch an der Mittelkonsole oder am Armaturenbrett angeordnet sein. Nachteilig bei dieser Anordnung ist die große Komplexität des Bedienhebels. Aufgrund der Vielzahl von Schaltern, Knöpfen und Bewegungsmöglichkeiten des Bedienhebels selbst ist eine klare Zuordnung der Steuerfunktionen des Bedienhebels für den ungeübten Bediener kaum intuitiv zu erfassen.

Weitere Lösungen versuchen einerseits, spezielle Bedienhebel hinter dem Lenkrad anzuordnen oder spezielle Tasten in der Prallplatte des Lenkrades zu nutzen. So ist z.B. aus der WO 97/13657 eine Schnittstelle für die Steuerung durch die Bedienperson bekannt, die die Werte einer Vielzahl von Funktionen in einem Fahrzeug steuert und entsprechende Informationen dazu der Bedienperson anzeigt. Es sind dabei eine Vielzahl von Funktionsgruppenschaltern am Lenkrad des Fahrzeuges angeordnet, wobei jeder der Fahrzeugfunktionen einer Funktionsgruppe zugeordnet ist; dabei aktiviert jeder der Funktionsgruppenschalter eine zugeordnete Funktionsgruppe. Im weiteren sind bevorzugt eine Vielzahl von Auswahlschaltern ebenfalls an dem Lenkrad des Fahrzeuges angeordnet, die dazu dienen, die Werte der den aktivierten Funktionsgruppen zugeordneten Funktionen einzustellen. Schließlich zeigt ein im direkten Blickfeld der Bedienperson liegendes Display den laufenden Wert einer Funktion einer aktivierten Funktionsgruppe an. Der Vorteil dieser Anordnung liegt insb. darin, daß die Bedienperson bei der Betätigung das Lenkrad des Fahrzeuges nicht loszulassen braucht und daß diese beim Erfassen der Anzeigen den Kopf kaum in seiner Ausrichtung ändern muß. Nachteilig bei dieser Anordnung ist insb. die nur eingeschränkte Anwendbarkeit, so ist z.B. eine schnelle und problemlose Eingabe eines Navigationszieles mit dieser Anordnung nicht möglich.

Weitergehende Lösungen versuchen andererseits, zur berührungslosen Steuerung des Mensch- Maschine- Dialogs die Vorteile eines Sprachprozessors auszunutzen. So zeigt z.B. die EP 1 172 585 A2 ein Fahrzeugssteuerungssystem, insb. für eine Schalteinrichtung für ein Automatikgetriebe, mit einem sprachgesteuerten Bediensystem. Diese Anordnung umfaßt ein Mikrofon zur Eingabe der Steueranweisung der Bedienperson, eine Spracherkennungseinheit zur Erkennung eines Sprachsignales aus der eingegebenen Anweisung, eine Anzeigevorrichtung zur Anzeige der von der Spracherkennungseinheit erkannten Steueranweisung, eine Steuerbestätigungseinheit zur Bestätigung der auszugebenden Steueranweisung durch eine Bestätigung der Bedienperson, die bestätigt, daß die Anzeige des Displays der tatsächlichen Steueranweisung der Bedienperson entspricht und eine Fahrzeugsteuereinheit zur Durchführung eines Steuervorganges gemäß der von der Spracherkennungseinrichtung ausgegebenen und von der Bedienperson bestätigten Steueranweisung. Eine derartige Anordnung weist ebenfalls den Vorteil auf, daß durch die Verwendung einer Steuerung mit einer Spracherkennung nicht mehr die Notwendigkeit besteht, zu deren Betätigung eine Hand vom Lenkrad zu nehmen. Andererseits weist diese Anordnung die typischen Nachteile der bekannten Systeme zur Spracherkennung auf, auf die noch eingegangen wird.

Eine weitere Lösung mit sprachgesteuerten Mitteln ist aus der EP 0 686 525 A1 bekannt. In diesem Falle ist eine Multifunktionseinrichtung offenbart, die zur Betätigung unterschiedlicher Stellglieder mit Mitteln zur sprachgesteuerten Betätigung und mit Mitteln zur manuellen Betätigung versehen ist. Es sind dabei allerdings die sprachgesteuerten Mittel nur zur Auswahl der unterschiedlichen Funktionsebenen vorgesehen, während die eigentliche Steuerung der der ausgewählten Funktionsebene zugeordneten Stellglieder nur über die manuell betätigbaren Mittel durchführbar ist. Es ist dabei bei einer Ausführungsform vorgesehen, daß die Auswahl der Funktionsebenen über die Eingabe von Schlüsselworten erfolgt. Auch mit dieser Anordnung ist insgesamt eine schnelle und problemlose Eingabe z.B. eines Navigationszieles nicht möglich.

Aus der EP 1 127 748 A2 ist eine modifizierte Vorrichtung zur Sprachsteuerung eines Gerätes bzw. ein entsprechendes Verfahren bekannt, die dazu dienen, Sprachausgaben mit bildhaften Hinweisen zu unterstützen. Diese bildhaften Hinweise werden mit künstlicher Gestik und/oder Mimik dargestellt, wobei die Darstellung entweder zweidimensional, dreidimensional und/oder mit bewegten Darstellungen erfolgt. Es soll durch die bildhaften Hinweise eine Annäherung an eine Mensch-zu-Mensch-Kommunikation erzielt werden und damit eine höhere Akzeptanz erreicht werden. Auch diese Anordnung weist allerdings die typischen Nachteile der bekannten Systeme zur Spracherkennung auf, auf die nachfolgend eingegangen wird.

Die Nutzung eines Sprachprozessors zur Realisierung einer Vorrichtung zur Steuerung einer Bildschirmanzeige, insb. für ein Kraftfahrzeug, ist nur realisierbar, wenn ein Sprachprozessor natürliche Sprache "Freitext" erkennen könnte. Es sind korrekte Interpretationen von Sätzen wie "Navigationsgerät, bitte suche mir die kürzeste Route nach Hamburg aus" zur Zeit nicht möglich. Statt dessen muß der Benutzer auch im Sprachdialog durch bestimmte Bedienmenüs geführt werden, wie "Navigation, Zieleingabe, Hamburg". Das setzt die Kenntnis und korrekte Verwendung von bestimmten Schlüsselworten wie "Zieleingabe" voraus. Dieses Schlüsselwort ist noch relativ einfach und mag intuitiv naheliegend sein. Aber z.B. die Auswahl des Streckentyps und damit verbundener Schlüsselwörter ("Landstraße", "Autobahn") im Dialog wird leicht zu "Mißverständnissen" zwischen System und Benutzer führen. lnsb. die Zieleingabe bereitet aufgrund von ähnlich klingenden Zielen und/oder undeutlicher Aussprache des Nutzers Probleme. Das Navigationssystem könnte z.B. "Homburg" statt "Hamburg" verstanden haben, mit der Folge notwendiger Korrekturen durch den Fahrer oder Rückfragen des Systems. Diese eingeschränkte Leistungsfähigkeit führt zu Fehlinterpretationen des Nutzerwunsches, die als entsprechend aversiv wahrgenommen werden und aufgrund der notwendigen Wiederholung von Dialogelementen und möglicher fehlender Dialogtransparenz zusätzlich ablenken. Diese Fehleranfälligkeit und Abhängigkeit von schwer erlernbaren Schlüsselwörtern reduziert die Akzeptanz für solche Systeme.

Schließlich ist aus der DE 44 27 444 A1 eine Einrichtung zur Sprachsteuerung von Anlagen und Geräten bekannt, mit Hilfe von den Betrieb der Anlage oder des Gerätes beeinflussenden Befehlen, bei der auf einer Anzeigevorrichtung in Abhängigkeit vom jeweiligen Betriebszustand ein Teil der insgesamt vorgesehenen Befehle dargestellt wird, wobei eine Eingabe durch Aussprache jeweils eines der dargestellten Befehle erfolgt. Ein Speicher ist zur Speicherung von jeweils über ein Mikrofon empfangenen Sprachsignalen oder davon abgeleiteter Signale vorgesehen. Die gespeicherten Signale werden mit sprachrelevanten Signalen verglichen, welche den jeweils dargestellten Befehlen entsprechen. Derjenige Befehl, bei welchem der Vergleich positiv ausfällt, wird als ausgewählt angenommen. Es soll durch diese Einrichtung insb. ein System bereitgestellt werden, daß dem Bediener ein Auswendiglernen vieler Befehle erspart. Nachteilig bei dieser Anordnung ist insb. das Darstellen der Befehle auf einer herkömmlichen Anzeigevorrichtung, es fehlen hier insb. im direkten Blickfeld der Bedienperson, z.B. in der Instrumententafel, integrierte variable Anzeigemöglichkeiten.

Eine vorrichtung zur Steuerung einer Bildschirmanzeige mit den Merkmalen des Oberbegriffs des 1. Anspruchs ist bekannt aus US-B-6240347.

Ausgehend von diesen bekannten Vorrichtungen zur Steuerung einer Bildschirmanzeige liegt der Erfindung die Aufgabe zugrunde, die bekannten Anordnungen unter Beibehaltung der bisherigen Vorteile in der Weise zu verbessern bzw. weiterzuentwickeln, daß die Nachteile der zuvor diskutierten Lösungen vermieden werden, wobei die Steuerung insb. auch für den ungeübten Benutzer einfach zu erfassen und zu betätigen sein soll. Dabei soll insb. eine schnelle und problemlose Eingabe z.B. eines Navigationszieles möglich sein, weiterhin soll eine Anzeige für die Menüführung sowie gleichzeitig auch der Analoginstrumente unter möglichst minimaler Ablenkung des Benutzers ermöglicht werden.

Die Aufgabe wird erfindungsgemäß dadurch gelöst, daß die Bildschirmanzeige für die Menüführung getrennte, den Analoginstrumentenbereich zumindest teilweise überdeckende Teil- Displays im primären und sekundären Blickfeld umfaßt, wobei die getrennten Teil- Displays aus einem festen Displaybereich und aus einem flexiblen Displaybereich bestehen, und daß die Mittel zur sprachgesteuerten Betätigung derart ausgebildet sind, daß die Menüpunkte der Menüs gleichzeitig die Schlüsselwörter für den Sprachprozessor bilden. Auf diese Weise wird erstmalig mit einfachen Mitteln erstmalig die Möglichkeit geschaffen, die Steuerung auch für den ungeübten Benutzer einfach und zuverlässig erfassen und betätigen zu können, wobei insb. eine schnelle und problemlose Eingabe z.B. eines Navigationszieles möglich ist. Dabei wird eine Anzeige für die Menüführung sowie gleichzeitig auch der Analoginstrumente bereitgestellt, die nur eine sehr geringe Ablenkung des Benutzers während des eigentlichen Fahrvorganges verursacht. Durch die erfindungsgemäße Kombination von Dialogpräsentation im Instrumentenpanel, manueller Bedienung z.B. durch ein separates Stellteil und Spracherkennung wird der gesamte Dialog sehr einfach und benutzerfreundlich gestaltet. Der Benutzer kann dabei Dialogelemente entweder über das manuelle Stellteil oder durch Nutzung des Sprachprozessors anwählen. Dabei sind die Auswahlelemente der Menüs gleichzeitig die Schlüsselwörter für den Sprachprozessor, es handelt sich also sozusagen um eine menügeführte Sprachsteuerung. Ein Lernen oder intuitives Erraten der Schlüsselbegriffe ist damit überflüssig, die Trefferquote ist im Vergleich zu den bisherigen Lösungen sehr hoch. Weiterhin wird durch die Visualisierung dem Benutzer trotz des Sprachdialogs die Ausbildung der Dialogstruktur verdeutlicht, was wiederum entscheidend die Nutzungssicherheit verbessert und die Produktakzeptanz hebt.

Bei der bevorzugten Ausführungsform der vorliegenden Erfindung ist der feste Displaybereich der Bildschirmanzeige für die Menüführung im zentralen Bereich des Bildschirmes, insb. zwischen Tachometer und Drehzahlmesser, angeordnet, es wird in diesem Bereich die Anzeige für die Menüführung für die Bedienperson ständig zu sehen sein. Dabei empfiehlt es sich nach einem weiteren Ausgestaltungsmerkmal der vorliegenden Erfindung, daß die Hauptmenüebene vor der Auswahl eines Menüpunktes in dem festen Displaybereich der Bildschirmanzeige für die Menüführung, insb. zwischen Tachometer und Drehzahlmesser, angeordnet ist, so daß der Benutzer praktisch ohne jegliche Ablenkung jeweils die Auswahl aus dem Hauptmenü treffen kann.

Nach einem weiteren Ausgestaltungsmerkmal der vorliegenden Erfindung weist zur Vereinfachung der Menüpunktauswahl die Bildschirmanzeige für die Menüführung eine einzelne Menüpunkte hervorhebende Bildschirmmarkierung auf.

Es empfiehlt sich nach einem weiteren Ausgestaltungsmerkmal der vorliegenden Erfindung, daß die Mittel zur manuellen Steuerung der Bildschirmanzeige über einen mechanischen Stellgeber gebildet sind. Dabei ist zweckmäßig der mechanische Stellgeber am Lenkrad des Fahrzeuges, insb. Kraftfahrzeuges, angeordnet, so daß nicht die Notwendigkeit besteht, für dessen Betätigung eine Hand vom Lenkrad zu nehmen. Es empfiehlt sich dabei, daß der mechanische Stellgeber zur Ausführung der Funktionen "Main Menü, Betätigung, eine Menüebene zurück, Bildschirmmarkierung hoch, Bildschirmmarkierung runter" ausgebildet ist.

Der mechanische Stellgeber weist zu seiner einfachen Betätigung zweckmäßig ein drehbares Bedienrad zur Steuerung der Bildschirmanzeige auf. Alternativ oder ergänzend ist der mechanische Stellgeber zur Bewegung der Bildschirmmarkierung nach oben bzw. unten nach oben bzw. unten bewegbar ausgebildet.

Nach einem weiteren Merkmal der vorliegenden Erfindung ist vorgesehen, daß die Mittel zur sprachgesteuerten Betätigung derart ausgebildet sind, daß in dem Falle eines nicht vollständigen Erscheinens aller Menüpunkte auf der Bildschirmanzeige die Menüpunkte durch einfache Sprachbefehle (z.B. "hoch/runter") verändert werden können, d.h. die Bildschirmanzeige kann in diesem Fall durch Sprachbefehle angepaßt werden.

Bevorzugt ist nach einem weiteren Ausgestaltungsmerkmal der vorliegenden Erfindung die Bildschirmmarkierung in ihrer Lage unveränderlich auf der Bildschirmanzeige ausgebildet ist, derart, daß die einzelnen Menüpunkte unter der Bildschirmarkierung her bewegt werden. Es stehen so die ausgewählten Elemente der vorhandenen Menüebenen in einer Linie bzw. am selben Ort, wodurch die Lesbarkeit verbessert wird.

Bei einer alternativen Ausführungsform ist die Bildschirmmarkierung in ihrer Lage veränderbar auf der Bildschirmanzeige ausgebildet ist, derart, daß die Bildschirmmarkierung beweglich über die einzelnen Menüpunkte hinwegfährt. Dabei sind die ausgewählten Elemente über das Display verteilt, wodurch das Einstellen der Menüpunkte vereinfacht wird.

Nach einem weiteren Merkmal der vorliegenden Erfindung ist die Bildschirmanzeige zur einzelnen, voneinander unabhängigen Anzeige der einzelnen Menüebenen ausgebildet. Das sichtbare Menüfeld wird hierbei in Portionen angezeigt; es wird zuerst die Hauptmenüebene gezeigt, bei Auswahl eines Elementes und Bestätigung erscheint die nächste Menüebene und dann die dritte Ebene.

Nach einem weiteren Ausgestaltungsmerkmal der vorliegenden Erfindung ist der flexible Displaybereich der Bildschirmanzeige für die Menüführung derart ausgebildet ist, daß die teilweise Überdeckung der Analoginstrumente nicht in deren äußerem Bereich erfolgt, so daß der äußere Skalenrand und die Spitze z.B. der Anzeigenadel noch sichtbar sind und deshalb trotz der Überdeckung noch Meßwerte abgelesen werden können. Dies ermöglicht trotz aktiviertem flexiblen Displaybereich noch eine ständige Erfassung von Meßwerten auf den Analoginstrumenten.

Zweckmäßig ist es nach einem weiteren Ausgestaltungsmerkmal, daß die Bildschirmanzeige wenigstens eine Statuszeile umfaßt. Diese Statuszeile kann z.B. bestimmte Einstellungen anzeigen, die sonst nur bei voll sichtbarer Anzeige vorhanden sind, wie beispielsweise Radiostation, Tripcomputer etc.

Es empfiehlt sich nach einem weiteren Merkmal der vorliegenden Erfindung, daß der flexible Displaybereich der Bildschirmanzeige für die Menüführung derart ausgebildet ist, daß in dessen eingeschaltetem Zustand im Falle von Warnmeldungen die Bildschirmanzeige in den Ausgangszustand zurückgesetzt wird. Damit können die überdeckten Bereiche der Analoginstrumente sofort wieder sichtbar gemacht werden.

Alternativ oder ergänzend ist zweckmäßig der flexible Displaybereich der Bildschirmanzeige für die Menüführung derart ausgebildet, daß in dessen eingeschaltetem Zustand, wenn sich die Menüführung in einer Menüebene befindet, die Bildschirmanzeige in den Ausgangszustand zurückgesetzt wird, wenn eine vorbestimmbare Zeit lang keine Eingabe erfolgt ist. Dies kann z.B. erfolgen, wenn der Benutzer länger als 20 Sek. keine Eingabe macht.

Nach einem weiteren Ausgestaltungsmerkmal der vorliegenden Erfindung umfaßt der Bildschirm eine einspiegelbare Bildschirmanzeige. Dabei empfiehlt es sich, daß die einspiegelbare Bildschirmanzeige einen halbdurchlässigen, transmissive und/oder reflektive schaltbaren Spiegel umfaßt. Dabei kann der Spiegel unter Ausnutzung des elektrochromatischen Effektes je nach Anlegen einer Spannung durch eine Steuereinheit transmissive oder reflektive geschaltet werden.

Alternativ oder ergänzend umfaßt die einspiegelbare Bildschirmanzeige einen festen, den festen Displaybereich darstellenden Spiegel und einen schaltbaren Spiegel, der den flexiblen Displaybereich in das Blickfeld der Bedienperson einspiegelt.

Bei einer weiteren Ausführungsform der vorliegenden Erfindung ist vorgesehen, daß die Bildschirmanzeige als vor den Analoginstrumenten angeordnetes Transmissionsdisplay ausgebildet ist. Dabei kann zweckmäßig nach einem weiteren Merkmal der vorliegenden Erfindung zur Abdeckung von Teilen der Analoginstrumente ein elektrochromatischer Spiegel vorgesehen sein, weiterhin kann alternativ oder ergänzend nach einem letzten Merkmal der vorliegenden Erfindung zur Abdeckung von Teilen der Analoginstrumente ein mechanischer Schutter vorgesehen sein.

Die Erfindung ist in den Figuren der Zeichnung in mehreren Ausführungsbeispielen dargestellt. Es zeigen:
- Fig. 1: eine Ansicht eines Bildschirmes der erfindungsgemäßen Vorrichtung mit eingeblendetem Hauptmenü und schematisch angedeutetem mechanischem Stellgeber,
- Fig. 2: eine Ansicht des Bildschirmes gemäß Fig.1 mit eingeblendetem Untermenü,
- Fig. 3: eine Ansicht des Bildschirmes gemäß Fig.1 mit eingeblendeter Funktionsebene,
- Fig. 4: eine schematische Ansicht eines Bildschirmes einer abgewandelten Ausführungsform der erfindungsgemäßen Vorrichtung mit einer einspiegelbaren Bildschirmanzeige,
- Fig. 5: eine schematische Seitenansicht des Bildschirmes der abgewandelten Ausführungsform gemäß Fig.4.

Die erfindungsgemäße Vorrichtung zur Steuerung einer Bildschirmanzeige ist vorgesehen für eine Verwendung insb. für Kraftfahrzeuge, es ist dabei die Bildschirmanzeige mit 11 und der dazugehörige Bildschirm generell mit 10 bezeichnet. Die erfindungsgemäße Vorrichtung zur Steuerung einer Bildschirmanzeige 11 dient zur Auswahl von mit 12 bezeichneten Menüpunkten und ist versehen mit Mitteln 13 zur sprachgesteuerten Betätigung und mit Mitteln 14 zur manuellen Betätigung sowie mit zumindest einem Bildschirm 10 mit einem Analoginstrumentenbereich 15 und mit einer Bildschirmanzeige 11 für die Menüführung, wobei die Bildschirmanzeige 11 für die Menüführung mit den Mitteln 13 zur sprachgesteuerten Betätigung und/oder den Mitteln 14 zur manuellen Betätigung gesteuert werden kann.

Es ist dabei erfindungsgemäß vorgesehen, daß die Bildschirmanzeige 11 für die Menüführung getrennte, den Analoginstrumentenbereich 15 zumindest teilweise überdeckende Teil- Displays im primären und sekundären Blickfeld umfaßt, wobei die getrennten Teil- Displays aus einem festen Displaybereich 16 und aus einem flexiblen Displaybereich 17 bestehen, und daß die Mittel 13 zur sprachgesteuerten Betätigung derart ausgebildet sind, daß die Auswahlelemente der Menüs gleichzeitig die Schlüsselwörter für den Sprachprozessor bilden.

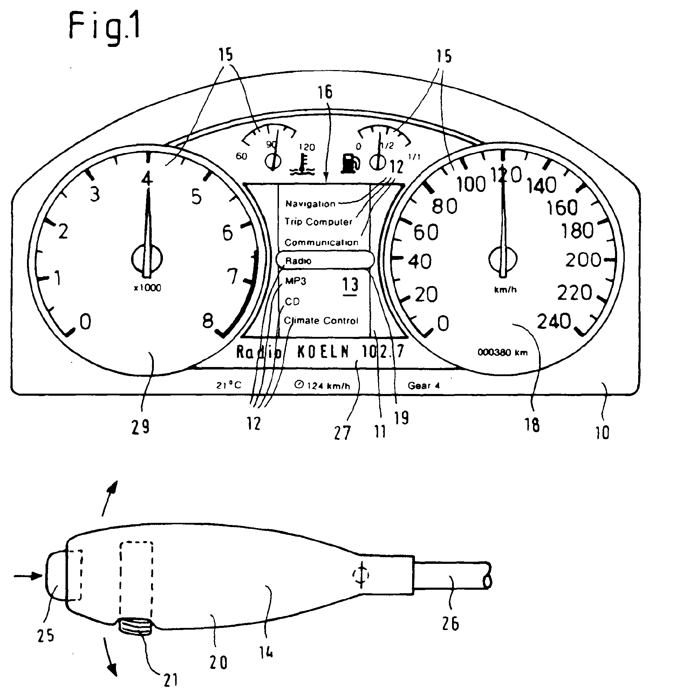

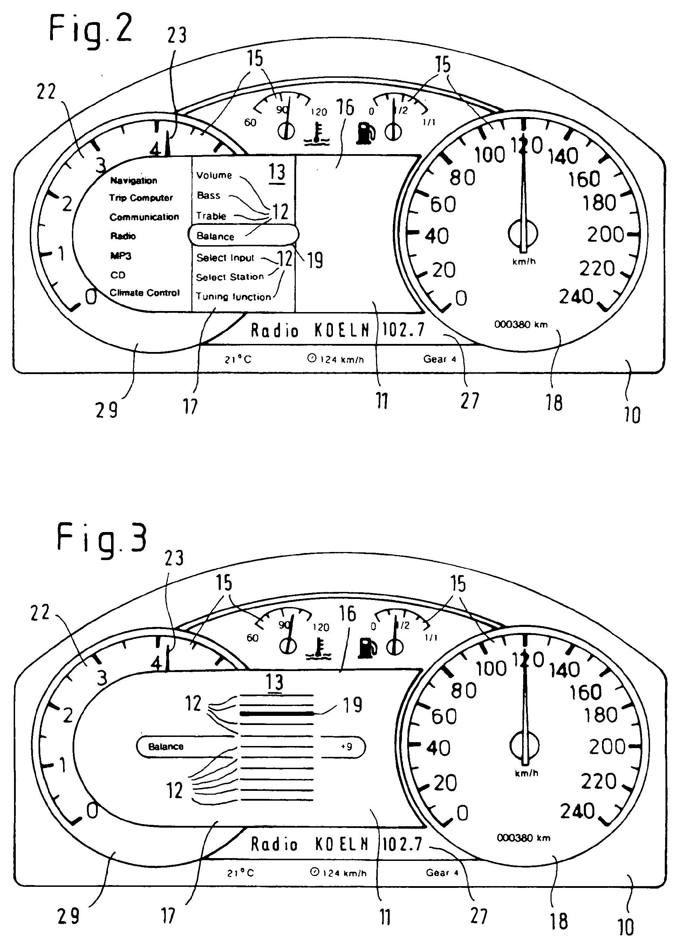

Es ist dazu in der Fig.1 der Zeichnung ein Bildschirm 10 mit einer Bildschirmanzeige 11 dargestellt, wobei der Bildschirm 10 im Blickfeld des Bedieners angeordnet ist. Die Bildschirmanzeige 11 nimmt dabei nur einen Teil des Bildschirmes 10 ein, der andere Teil wird u.a. von Analoginstrumenten 15, wie Tachometer 18, Drehzahlmesser 29, Benzin- und Temperaturanzeige (hier nicht bezeichnet) etc. gebildet. In diesem Fall ist nur der feste Displaybereich 16 der Bildschirmanzeige 11 dargestellt, wobei dieser feste Displaybereich 16 der Bildschirmanzeige 11 für die Menüführung im zentralen Bereich des Bildschirmes 10, hier zwischen Tachometer 18 und Drehzahlmesser 29, angeordnet ist. Dabei ist der Fall dargestellt, daß die Hauptmenüebene vor der Auswahl eines Menüpunktes 12 in diesem festen Displaybereich 16 der Bildschirmanzeige 11 für die Menüführung, hier zwischen Tachometer 18 und Drehzahlmesser 29, angeordnet ist. Die Bildschirmanzeige 11 für die Menüführung weist bei den dargestellten Ausführungsbeispielen eine einzelne Menüpunkte 12 hervorhebende Bildschirmmarkierung 19 auf, diese Bildschirmmarkierung 19 ist in der Fig.1 für das Hauptmenü und in der Fig.2 für das Untermenü "Radio" dargestellt.

Die Mittel 14 zur manuellen Steuerung der Bildschirmanzeige 11 sind über einen mechanischen Stellgeber 20 gebildet. Es ist dazu in der Fig.1 ein solcher mechanischer Stellgeber 20 schematisch dargestellt, der z.B. als Bedienhebel od. dgl. ausgebildet sein kann, es läßt sich über diesen manuellen Stellgeber 20 die Bildschrimanzeige 11 bedienen und steuern. Der mechanische Stellgeber 20 umfaßt ein drehbares Bedienrad 21 zur Steuerung der Bildschirmanzeige 11 und kann am Lenkrad des Fahrzeuges, insb. Kraftfahrzeuges, angeordnet sein, so ist der in Fig.1 dargestellte mechanische Stellgeber 20 am nicht dargestellten Lenkstock angeordnet. Der mechanische Stellgeber 20 ist dabei so geformt, daß die linke Hand des Bedieners, der hier der Fahrer ist, am Lenkrad verbleiben kann und das drehbare Bedienrad 21 mit dem Zeige- und Mittelfinger gut erreichbar ist, indem das Bedienrad 21 zur dem Bediener abgewandten Seite aus dem mechanischen Stellgeber 20 ragt. Alternativ oder ergänzend zu dem drehbaren Bedienrad 21 kann der mechanische Stellgeber 20 zur Bewegung der Bildschirmmarkierung 19 nach oben bzw. unten nach oben bzw. unten bewegbar ausgebildet sein.

Der mechanische Stellgeber 20 kann zur Ausführung der Funktionen "Main Menü, Betätigung, eine Menüebene zurück, Bildschirmmarkierung hoch, Bildschirmmarkierung runter" ausgebildet sein.

Die Mittel 13 zur sprachgesteuerten Betätigung sind bevorzugt derart ausgebildet, daß in dem Falle eines nicht vollständigen Erscheinens aller Menüpunkte 12 auf der Bildschirmanzeige 11 die Menüpunkte 12 durch einfache Sprachbefehle (z.B. "hoch/runter") verändert werden können. Weiterhin ist bevorzugt die Bildschirmmarkierung 19 in ihrer Lage unveränderlich auf der Bildschirmanzeige 11 ausgebildet, derart, daß die einzelnen Menüpunkte 12 unter der Bildschirmarkierung 19 her bewegt werden. So werden bei dem in der Fig.1 dargestellten Ausführungsbeispiel durch Drehen des Bedienrades 21 die einzelnen Menüpunkte 12 unter der Bildschirmmarkierung 19, diese ist hier durch einen hervorgehobenen Rand erkennbar, hinweg verschoben. Dies vereinfacht die Lesbarkeit, da sich der auszuwählende Menüpunkt 12 immer an derselben Stelle, d. h. an der feststehenden Bildschirmmarkierung 19, befindet. Hier ist der markierte Menüpunkt 12 die Steuerung des Radios. Die Bestätigung eines ausgewählten Menüpunktes 12, auf dem gerade die Bildschirmmarkierung 19 steht, erfolgt dann entweder durch Aussprechen eines der dargestellten Menüpunkte 12, z.B. "Radio", oder z.B. durch Heranziehen des mechanischen Stellgebers 20 an den Bediener, wodurch ein hier nicht dargestellter Tastschalter betätigt wird. Im weiteren kann z.B. durch Wegdrücken des gesamten mechanischen Stellgebers 20 vom Bediener, bei dem ein weiterer Tastschalter betätigt wird, die Bildschirmanzeige 11 um eine Menüebene zurückspringen. Ein zusätzlicher Drucktaster 25 an der Stirnseite des mechanischen Stellgebers 20 kann eine Rückstellfunktion haben, d. h. bei Betätigung dieses Drucktasters 25 springt die Bildschirmanzeige 11 direkt in das Hauptmenü zurück. Hierdurch wird sichergestellt, daß der Bediener auf einfache Weise immer sofort in die Ausgangslage, d. h. das Hauptmenü, zurückgelangt, ohne sich mühsam durch einzelne Untermenüs zurückzuschalten.

Bei einer alternativen, hier nicht dargestellten Ausführungsform ist die Bildschirmmarkierung 19 in ihrer Lage veränderbar auf der Bildschirmanzeige 11 ausgebildet ist, derart, daß die Bildschirmmarkierung 19 beweglich über die einzelnen Menüpunkte 12 hinwegfährt. Dabei sind die ausgewählten Elemente über das Display verteilt, wodurch das Einstellen der Menüpunkte 12 vereinfacht wird.

Die Bildschirmanzeige 11 gemäß der Vorrichtung nach der vorliegenden Erfindung ist zur einzelnen, voneinander unabhängigen Anzeige der einzelnen Menüebenen ausgebildet. Das sichtbare Menüfeld wird hierbei in Portionen angezeigt; es wird zuerst die Hauptmenüebene gezeigt, siehe Fig.1, bei Auswahl eines Elementes und Bestätigung erscheint die nächste Menüebene und dann die dritte Ebene, siehe die Fig.2 und 3 der Zeichnung.

Der Bediener hat bei dem in Fig.1 dargestellten Hauptmenü die Auswahl, ob er eine Einstellung über den mechanischen Stellgeber 20 oder über die Spracherkennung ausführen möchte. Er gelangt also z.B. durch Aussprechen eines der in Fig.1 dargestellten, gleichzeitig die Schlüsselworte bildenden, Menüpunkte 12, z.B. "Radio", oder durch eine Betätigung des mechanischen Stellgebers 20 in die nächste Menüebene; es ist dazu in der Fig.2 das Untermenü "Radio" dargestellt. Dieses Prinzip ist dem Bediener auch aufgrund seiner Erfahrungen mit PC- Software (Windows) vertraut. Dabei bleibt, siehe Fig.2, das Hauptmenü an der linken Seite weiterhin stehen und erleichtert somit dem Bediener die Nachvollziehbarkeit des Dialoges bzw. der Dialogtiefe.

Der flexible Displaybereich 17 der Bildschirmanzeige 11 für die Menüführung ist derart ausgebildet, siehe wieder Fig.2, daß die teilweise Überdeckung der Analoginstrumente 15 nicht in deren äußerem Bereich erfolgt, so daß der äußere Skalenrand 22 und die Spitze z.B. der Anzeigenadel 23 noch sichtbar sind und deshalb trotz der Überdeckung noch Meßwerte abgelesen werden können, in diesem Fall der Stand des Drehzahlmessers 29. Dadurch wird trotz aktiviertem flexiblen Displaybereich 17 noch eine ständige Erfassung von Meßwerten auf den Analoginstrumenten ermöglicht. Ergänzend dazu umfaßt in dem dargestellten Ausführungsbeispiel die Bildschirmanzeige 11 eine Statuszeile 27, die zur Anzeige bestimmter Einstellungen dient, die sonst nur bei voll sichtbarer Anzeige vorhanden sind, wie beispielsweise Radiostation, Tripcomputer etc, es zeigt bei den dargestellten Ausführungsbeispielen die Statuszeile 27 die eingestellte Radiostation an.

Gemäß einer bevorzugten Ausführungsform ist der flexible Displaybereich 17 der Bildschirmanzeige 11 für die Menüführung derart ausgebildet, daß in dessen eingeschaltetem Zustand im Falle von Warnmeldungen die Bildschirmanzeige 11 in den Ausgangszustand zurückgesetzt wird. Dadurch können die überdeckten Bereiche der Analoginstrumente 15 sofort wieder sichtbar gemacht werden. Alternativ oder ergänzend ist der flexible Displaybereich 17 der Bildschirmanzeige 11 für die Menüführung derart ausgebildet, daß in dessen eingeschaltetem Zustand, wenn sich die Menüführung in einer Menüebene befindet, die Bildschirmanzeige 11 in den Ausgangszustand zurückgesetzt wird, wenn eine vorbestimmbare Zeit lang keine Eingabe erfolgt ist; dies kann z.B. erfolgen, wenn der Benutzer länger als 20 Sek. keine Eingabe macht.

Bei dem in Fig. 2 dargestellten Untermenü wird das Bedienkonzept für das Hauptmenü aus der Fig.1 beibehalten. Dabei stellen die Listeneinträge in dem Menü wieder die Schlüsselwörter für den Sprachprozessor dar, was zusätzlich den Vorteil hat, daß das System sehr einfach erweiterbar ist. So Können neue Funktionen einfach durch neue Listeneinträge hinzugefügt werden. Dem Benutzer ist dabei das Bedienkonzept vertraut, ein emeutes Lernen ist nicht notwendig.

Durch das Aussprechen des Wortes "Balance" oder eine entsprechende Betätigung durch den mechanischen Stellgeber 20 würde, ausgehend von dem Untermenü nach Fig.2 das letzte Menü gemäß Fig.3 erscheinen. Dazu müßte zuvor ein Drehen des Bedienrades 21 erfolgen, bis der Menüpunkt "Balance" unter der Bildschirmmarkierung 19 liegt, durch die erwähnte Bestätigung per Sprache oder mit dem mechanischen Stellgeber 20 gelangt man dann zur Funktionsebene "Balance" gemäß Fig.3.

Die Überlegenheit einer derart menügeführten Sprachsteuerung wird besonders deutlich bei dem Navigationsmenü. Wenn die Stadt "Hamburg" bei der Stadtauswahl, die als Codewort z.B. in einem Menüeintrag auftaucht, gesprochen wird, kann das Navigationssystem alle Städte auf der Bildschirmanzeige 11 anzeigen, die in etwa ähnlich dem Wort "Hamburg" klingen, wie z.B. "Homburg". In diesem Fall tauchen die Städtenamen als neue Listeneinträge auf. Das dem gesprochenen Wort am ähnlichsten klingende Wort wird in der Liste an einem besonderen Ort angezeigt, im vorliegenden Fall unter der Bildschirmmarkierung 19. Der Benutzer kann nun außer mit Sprachauswahl auch mit dem mechanischen Stellgeber 20 auswählen, so würde z.B. unter akustisch ungünstigen Verhältnissen der lästige Frage/Antwortteil entfallen.

Für die manuelle Bedienung des Systems wurde ein spezieller Bedienhebel entwickelt, der in der prioritätsbeanspruchten Voranmeldung mit dem Aktenzeichen EP 02004845.0 offenbart ist. Dieser Bedienhebel kann z.B. rechts hinter dem Lenkrad positioniert sein, z.B. an der Stelle des heutigen externen Radioschalters und ist mit beiden Händen am Lenkrad bedienbar. Mit diesem Bedienhebel, siehe dazu auch wieder die Fig.1, läßt sich neben der Sprachregelung das gesamte System steuern. Das Bedienrad 21 ermöglicht dabei u.a. das Auswählen bestimmter Menüpunkte 12 aus einem Menü, anstelle des Bedienrades 21 könnten aber auch andere Bedienelemente wie Taster oder Zughebel vorgesehen sein. Eine Bestätigung kann dabei z.B. durch Zug des Hebels erfolgen, und z.B. durch Wegdrücken des gesamten Hebels könnte man eine Menüebene zurückspringen. Über einen Drucktaster 25 am Ende des Hebels wird es dem Benutzer z.B. ermöglicht, aus irgendeinem Menü in das Hauptmenü zurückzuspringen. Hierdurch wird sichergestellt, daß der Benutzer immer in die Ausgangslage zurückgelangt (Reset- Funktion). Der Bedienhebel ist dabei zweckmäßig so geformt, daß die linke Hand am Lenkrad verbleiben kann und das Bedienrad 21 mit dem Zeige- und Mittelfinger gut erreichbar ist. Dabei können bei einer Ausführungsform durch Drehen des Bedienrades 21 auf der Rückseite des Hebels die einzelnen Listeneinträge unter der Bildschirmmarkierung 19 hinweggedreht werden. Dadurch wird die Lesbarkeit vereinfacht, da sich der auszuwählende Eintrag, z.B. "Radio", immer an derselben Stelle befindet.

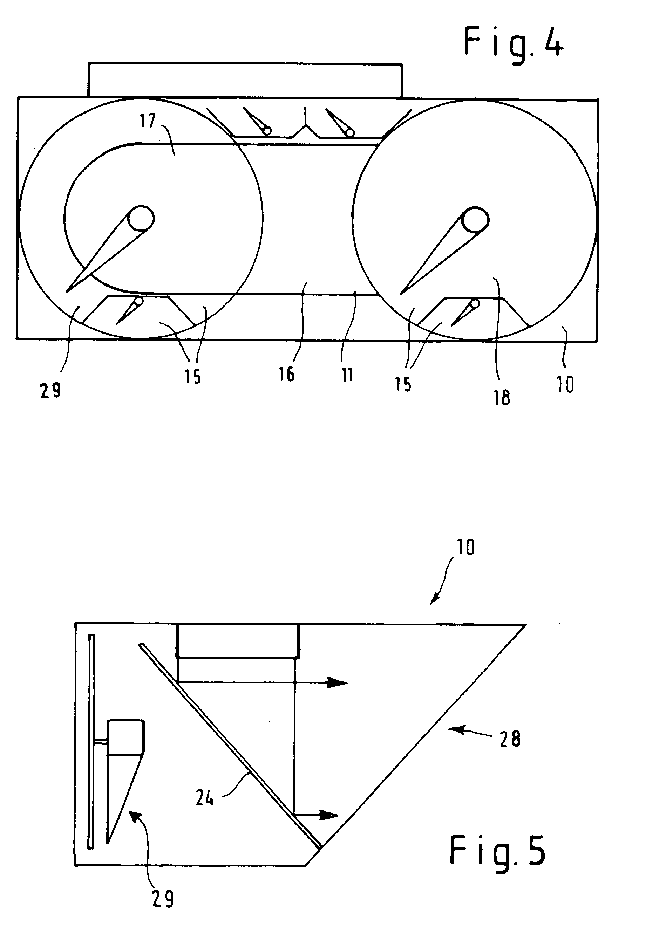

Gemäß einem weiteren Ausgestaltungsmerkmal der vorliegenden Erfindung umfaßt der Bildschirm 10 eine einspiegelbare Bildschirmanzeige 11, siehe dazu insb. die Fig.4 und 5 der Zeichnung. Es zeigt dazu die Fig.4 eine schematische Ansicht dieser abgewandelten Ausführungsform, wobei hier wieder verschiedene Analoginstrumente 15, u.a. Tachometer 18 und Drehzahlmesser 29, dargestellt sind, im weiteren dargestellt sind der feste Displaybereich 16 und der flexible Displaybereich 17 der Bildschirmanzeige 11, und zwar letzterer in eingeschaltetem Zustand. Die Fig.5 zeigt dazu die entsprechende Seitenansicht zu dieser Ausführungsform, wobei hier im vorderen Bereich des Bildschirmes 10 noch schematisch eine mit 28 bezeichnete Linse angedeutet ist.

Die dargestellte einspiegelbare Bildschirmanzeige 11 kann unterschiedliche Ausgestaltungen aufweisen. Bei einer bevorzugten Ausführungsform umfaßt die einspiegelbare Bildschirmanzeige 11 einen halbdurchlässigen, transmissive und/oder reflektive schaltbaren Spiegel 24. Es kann dabei der Spiegel unter Ausnutzung des elektrochromatischen Effektes je nach Anlegen einer Spannung durch eine Steuereinheit transmissive oder reflektive geschaltet werden.

Alternativ oder ergänzend kann die einspiegelbare Bildschirmanzeige 11 einen festen, den festen Displaybereich 16 darstellenden Spiegel umfassen und einen schaltbaren Spiegel, der den flexiblen Displaybereich 17 in das Blickfeld der Bedienperson einspiegelt.

Weiterhin kann vorgesehen sein, daß die Bildschirmanzeige 11 als vor den Analoginstrumenten 15 angeordnetes Transmissionsdisplay ausgebildet ist. Dabei ist zweckmäßig zur Abdeckung von Teilen der Analoginstrumente 15 ein elektrochromatischer Spiegel vorgesehen, alternativ oder ergänzend dazu kann zur Abdeckung von Teilen der Analoginstrumente 15 ein mechanischer Schutter vorgesehen sein.

Mit der erfindungsgemäßen Vorrichtung wird die Möglichkeit geschaffen, die Steuerung auch für den ungeübten Benutzer einfach und zuverlässig erfassen und betätigen zu können, wobei insb. eine schnelle und problemlose Eingabe z.B. eines Navigationszieles möglich ist. Dabei wird eine Anzeige für die Menüführung sowie gleichzeitig auch der Analoginstrumente 15 bereitgestellt, die nur eine sehr geringe Ablenkung des Benutzers während des eigentlichen Fahrvorganges verursacht. Eine lange Ablenkung von der primären Fahraufgabe kam bisher z.B. bei der je nach Verkehrssituation möglicherweise erneuten Zieleingabe für das Navigationssystem in Betracht. Durch die erfindungsgemäße Kombination von Dialogpräsentation im Instrumentenpanel, manueller Bedienung z.B. durch ein separates Stellteil und Spracherkennung wird der gesamte Dialog sehr einfach und benutzerfreundlich gestaltet. Der Benutzer kann dabei Dialogelemente entweder über das manuelle Stellteil oder durch Nutzung des Sprachprozessors anwählen. Dabei sind die Auswahlelemente der Menüs gleichzeitig die Schlüsselwörter für den Sprachprozessor, es handelt sich also sozusagen um eine menügeführte Sprachsteuerung. Es ist dabei zum einen kein hoher visueller Aufwand mehr notwendig, um mehr oder weniger kleine Stellteile im bewegten Fahrzeug sicher treffen und bedienen zu können und zum anderen ist ein Lernen oder intuitives Erraten der Schlüsselbegriffe ist damit überflüssig, die Trefferquote ist im Vergleich zu den bisherigen Lösungen sehr hoch. Weiterhin wird durch die Visualisierung dem Benutzer trotz des Sprachdialogs die Ausbildung der Dialogstruktur verdeutlicht, was wiederum entscheidend die Nutzungssicherheit verbessert und die Produktakzeptanz hebt.

Insgesamt wird durch die erfindungsgemäße kombinierte manuell- sprachprozessor gesteuerte Lösung eine erhebliche Verbesserung der Bedienbarkeit erreicht, eine wesentlich geringere (visuelle) Ablenkung des Fahrers und damit einen positiven Beitrag zur Verkehrssicherheit, was auch die Produktakzeptanz entscheidend erhöht.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. Insbesondere sind als Bildschirm abweichende optische Darstellungsformen zu berücksichtigen, die einem Betrachter eine geeignete Betrachtung der Bildschirmanzeige der erfingungsgemäßen Vorrichtung ermöglicht, ggfs. kombiniert mit weiteren Bildschirmen wie Bildschirme in der Mittelkonsole eines Fahrzeuges, weitere Bildschirme im oder am Armaturenbrett, in Kopfstützen, am Dachhimmel angeordnet, Bildprojektionen auf die Windschutzscheibe, Head-Up Displays usw. Der mechanische Stellgeber 20 kann auch an einer anderen für den Bediener einfach zu erreichenden Stelle angeordnet sein, wie z.B. an der Prallplatte des Lenkrades oder dgl. Auch die Auswahl der zu steuernden Fahrzeugfunktionen ist nicht auf die hier besprochenen Funktionen beschränkt, vielmehr können alle vom Bediener zu steuernden Funktionen, auch solche, die nicht unmittelbar mit dem Fahrzeug verknüpft sind, z. B. Mobiltelefone, über die erfindungsgemäße Vorrichtung gesteuert werden. Bezüglich der gezeigten Bildschirmanzeige 11 von Hauptmenü, Untermenü und Funktionsebene ist der Anzahl von Untermenüs und weiteren Funktionsebenen ebenfalls keine Grenze gesetzt. Auch sind bei der Steuerung der Menüpunkte und der Bildschirmmarkierung beliebige Abwandlungen möglich.

## Patentansprüche

1. Vorrichtung zur Steuerung einer Bildschirmanzeige (11), insb. für ein Kraftfahrzeug, zur Auswahl von Menüpunkten (12), mit Mitteln (13) zur sprachgesteuerten Betätigung und mit Mitteln (14) zur manuellen Betätigung sowie mit zumindest einem Bildschirm (10) mit einem Analoginstrumentenbereich (15) und mit einer Bildschirmanzeige (11) für die Menüführung, wobei die Bildschirmanzeige (11) für die Menüführung mit den Mitteln (13) zur sprachgesteuerten Betätigung und/oder den Mitteln (14) zur manuellen Betätigung gesteuert werden kann,
**dadurch gekennzeichnet, daß**
die Bildschirmanzeige (11) für die Menüführung getrennte, den Analoginstrumentenbereich (15) zumindest teilweise überdeckende Teil-Displays im primären und sekundären Blickfeld umfaßt, wobei die getrennten Teil- Displays aus einem festen Displaybereich (16) und aus einem flexiblen Displaybereich (17) bestehen, und daß die Mittel (13) zur sprachgesteuerten Betätigung derart ausgebildet sind, daß die Menüpunkte (12) der Menüs gleichzeitig die Schlüsselwörter für den Sprachprozessor bilden.

2. Vorrichtung zur Steuerung einer Bildschirmanzeige nach Anspruch 1,
**dadurch gekennzeichnet, daß**
der feste Displaybereich (16) der Bildschirmanzeige (11) für die Menüführung im zentralen Bereich des Bildschirmes (10), insb. zwischen Tachometer (18) und Drehzahlmesser (29), angeordnet ist.

3. Vorrichtung zur Steuerung einer Bildschirmanzeige nach Anspruch 2,
**dadurch gekennzeichnet, daß**
die Hauptmenüebene vor der Auswahl eines Menüpunktes (12) in dem festen Displaybereich (16) der Bildschirmanzeige (11) für die Menüführung, insb. zwischen Tachometer (18) und Drehzahlmesser (29), angeordnet ist.

4. Vorrichtung zur Steuerung einer Bildschirmanzeige nach einem der Ansprüche 1 bis 3,
**dadurch gekennzeichnet, daß**
die Bildschirmanzeige (11) für die Menüführung eine einzelne Menüpunkte (12) hervorhebende Bildschirmmarkierung (19) aufweist.

5. Vorrichtung zur Steuerung einer Bildschirmanzeige nach einem der Ansprüche 1 bis 4,
**dadurch gekennzeichnet, daß**
die Mittel (14) zur manuellen Steuerung der Bildschirmanzeige (11) über einen mechanischen Stellgeber (20) gebildet sind.

6. Vorrichtung zur Steuerung einer Bildschirmanzeige nach Anspruch 5,
**dadurch gekennzeichnet, daß**
der mechanische Stellgeber (20) am Lenkrad des Fahrzeuges, insb. Kraftfahrzeuges, angeordnet ist.

7. Vorrichtung zur Steuerung einer Bildschirmanzeige nach Anspruch 5 oder 6,
**dadurch gekennzeichnet, daß**
der mechanische Stellgeber (20) zur Ausführung der Funktionen "Main Menü, Betätigung, eine Menüebene zurück, Bildschirmmarkierung hoch, Bildschirmmarkierung runter" ausgebildet ist.

8. Vorrichtung zur Steuerung einer Bildschirmanzeige nach einem der Ansprüche 5 bis 7,
**dadurch gekennzeichnet, daß**
der mechanische Stellgeber (20) ein drehbares Bedienrad (21) zur Steuerung der Bildschirmanzeige (11) umfaßt.

9. Vorrichtung zur Steuerung einer Bildschirmanzeige nach einem der Ansprüche 5 bis 8,
**dadurch gekennzeichnet, daß**
der mechanische Stellgeber (20) zur Bewegung der Bildschirmmarkierung (19) nach oben bzw. unten nach oben bzw. unten bewegbar ausgebildet ist.

10. Vorrichtung zur Steuerung einer Bildschirmanzeige nach einem der Ansprüche 1 bis 9,
**dadurch gekennzeichnet, daß**
die Mittel (13) zur sprachgesteuerten Betätigung derart ausgebildet sind, daß in dem Falle eines nicht vollständigen Erscheinens aller Menüpunkte (12) auf der Bildschirmanzeige (11) die Menüpunkte (12) durch einfache Sprachbefehle (z.B. "hoch/runter") verändert werden können.

11. Vorrichtung zur Steuerung einer Bildschirmanzeige nach einem der Ansprüche 1 bis 10,
**dadurch gekennzeichnet, daß**
die Bildschirmmarkierung (19) in ihrer Lage unveränderlich auf der Bildschirmanzeige (11) ausgebildet ist, derart, daß die einzelnen Menüpunkte (12) unter der Bildschirmarkierung (19) her bewegt werden.

12. Vorrichtung zur Steuerung einer Bildschirmanzeige nach einem der Ansprüche 1 bis 10,
**dadurch gekennzeichnet, daß**
die Bildschirmmarkierung (19) in ihrer Lage veränderbar auf der Bildschirmanzeige (11) ausgebildet ist, derart, daß die Bildschirmmarkierung (19) beweglich über die einzelnen Menüpunkte (12) hinwegfährt.

13. Vorrichtung zur Steuerung einer Bildschirmanzeige nach einem der Ansprüche 1 bis 12,
**dadurch gekennzeichnet, daß**
die Bildschirmanzeige (11) zur einzelnen, voneinander unabhängigen Anzeige der einzelnen Menüebenen ausgebildet ist.

14. Vorrichtung zur Steuerung einer Bildschirmanzeige nach einem der Ansprüche 1 bis 13,
**dadurch gekennzeichnet, daß**
der flexible Displaybereich (17) der Bildschirmanzeige (11) für die Menüführung derart ausgebildet ist, daß die teilweise Überdeckung der Analoginstrumente (15) nicht in deren äußerem Bereich erfolgt, so daß der äußere Skalenrand (22) und die Spitze z.B. der Anzeigenadel (23) noch sichtbar sind und deshalb trotz der Überdeckung noch Meßwerte abgelesen werden können.

15. Vorrichtung zur Steuerung einer Bildschirmanzeige nach einem der Ansprüche 1 bis 14,
**dadurch gekennzeichnet, daß**
die Bildschirmanzeige (11) wenigstens eine Statuszeile (27) umfaßt.

16. Vorrichtung zur Steuerung einer Bildschirmanzeige nach einem der Ansprüche 11 bis 15,
**dadurch gekennzeichnet, daß**
der flexible Displaybereich (17) der Bildschirmanzeige (11) für die Menüführung derart ausgebildet ist, daß in dessen eingeschaltetem Zustand im Falle von Wammeldungen die Bildschirmanzeige (11) in den Ausgangszustand zurückgesetzt wird.

17. Vorrichtung zur Steuerung einer Bildschirmanzeige nach einem der Ansprüche 1 bis 16,
**dadurch gekennzeichnet, daß**
der flexible Displaybereich (17) der Bildschirmanzeige (11) für die Menüführung derart ausgebildet ist, daß in dessen eingeschaltetem Zustand, wenn sich die Menüführung in einer Menüebene befindet, die Bildschirmanzeige (11) in den Ausgangszustand zurückgesetzt wird, wenn eine vorbestimmbare Zeit lang keine Eingabe erfolgt ist.

18. Vorrichtung zur Steuerung einer Bildschirmanzeige nach einem der Ansprüche 1 bis 17,
**dadurch gekennzeichnet, daß**
der Bildschirm (10) eine einspiegelbare Bildschirmanzeige (11) umfaßt.

19. Vorrichtung zur Steuerung einer Bildschirmanzeige nach Anspruch 18,
**dadurch gekennzeichnet, daß**
die einspiegelbare Bildschirmanzeige (11) einen halbdurchlässigen, transmissive und/oder reflektive schaltbaren Spiegel (24) umfaßt.

20. Vorrichtung zur Steuerung einer Büdschirmanzeige nach Anspruch 18,
**dadurch gekennzeichnet, daß**
die einspiegelbare Bildschirmanzeige (11) einen festen, den festen Displaybereich (16) darstellenden Spiegel und einen schaltbaren Spiegel umfaßt, der den flexiblen Displaybereich (17) in das Blickfeld der Bedienperson einspiegelt.

21. Vorrichtung zur Steuerung einer Bildschirmanzeige nach einem der Ansprüche 1 bis 20,
**dadurch gekennzeichnet, daß**
die Bildschirmanzeige (11) als vor den Analoginstrumenten (15) angeordnetes Transmissionsdisplay ausgebildet ist.

22. Vorrichtung zur Steuerung einer Bildschirmanzeige nach Anspruch 21,
**dadurch gekennzeichnet, daß**
zur Abdeckung von Teilen der Analoginstrumente (15) ein elektrochromatischer Spiegel vorgesehen ist.

23. Vorrichtung zur Steuerung einer Bildschirmanzeige nach Anspruch 21,
**dadurch gekennzeichnet, daß**
zur Abdeckung von Teilen der Analoginstrumente (15) ein mechanischer Schutter vorgesehen ist.

## Claims

1. Device for controlling a screen display (11), in particular for a motor vehicle, for selecting menu items (12), having means (13) for speech-controlled activation, and having means (14) for manual activation as well as having at least one screen (10) with an analog instrument region (15), and having a screen display (11) for menu prompting, the screen display (11) for menu prompting being capable of being controlled with the means (13) for speech-controlled activation and/or the means (14) for manual activation,
**characterized in that**
the screen display (11) for menu prompting comprises separate component displays, at least partially overlapping the analog instrument region (15), in the primary and secondary fields of vision, the separate component displays being composed of a fixed display region (16) and of a flexible display region (17), and **in that** the means (13) for speech-controlled activation are designed in such a way that the menu items (12) of the menus simultaneously form the keywords for the speech processor.

2. Device for controlling a screen display according to Claim 1,
**characterized in that**
the fixed display region (16) of the screen display (11) for menu prompting is arranged in the central region of the screen (10), in particular between the speedometer (18) and rev counter (29).

3. Device for controlling a screen display according to Claim 2,
**characterized in that**
the main menu level is arranged before the selection of a menu item (12) in the fixed display region (16) of the screen display (11) for menu prompting, in particular between the speedometer (18) and rev counter (29).

4. Device for controlling a screen display according to one of Claims 1 to 3,
**characterized in that**
the screen display (11) has, for menu prompting, a mark (19) on the screen which emphasizes individual menu items (12).

5. Device for controlling a screen display according to one of Claims 1 to 4,
**characterized in that**
the means (14) for manually controlling the screen display (11) are formed by means of a mechanical actuator (20).

6. Device for controlling a screen display according to Claim 5, **characterized in that**
the mechanical actuator (20) is arranged on the steering wheel of the vehicle, in particular motor vehicle.

7. Device for controlling a screen display according to Claim 5 or 6,
**characterized in that**
the mechanical actuator (20) is designed to carry out the "main menu, activation, one menu level back, mark on the screen up, mark on the screen down" functions.

8. Device for controlling a screen display according to one of Claims 5 to 7,
**characterized in that**
the mechanical actuator (20) comprises a rotatable operator control wheel (21) for controlling the screen display (11).

9. Device for controlling a screen display according to one of Claims 5 to 8,
**characterized in that**
the mechanical actuator (20) is designed so as to be capable of moving up or down in order to move the mark (19) on the screen up or down.

10. Device for controlling a screen display according to one of Claims 1 to 9,
**characterized in that**
the means (13) for speech-controlled activation are designed in such a way that, if there is an incomplete appearance of all the menu items (12) on the screen display (11), the menu items (12) can be changed by means of simple speech commands (for example "up/down").

11. Device for controlling a screen display according to one of Claims 1 to 10,
**characterized in that**
the mark (19) on the screen is designed to have a nonvariable position on the screen display (11) in such a way that the individual menu items (12) are moved under the mark (19) on the screen.

12. Device for controlling a screen display according to one of Claims 1 to 10,
**characterized in that**
the mark (19) on the screen is designed to have a variable position on the screen display (11) in such a way that the mark (19) on the screen moves away in a mobile fashion over the individual menu items (12).

13. Device for controlling a screen display according to one of Claims 1 to 12,
**characterized in that**
the screen display (11) is designed to display the individual menu levels individually and independently of one another.

14. Device for controlling a screen display according to one of Claims 1 to 13,
**characterized in that**
the flexible display region (17) of the screen display (11) is designed for menu prompting in such a way that the partial overlapping of the analog instruments (15) does not occur in their outer region so that the outer edge (22) of the scale and the tip, for example of the display pointer (23), are still visible, and for this reason measured values can still be read off despite the overlap.

15. Device for controlling a screen display according to one of Claims 1 to 14, **characterized in that**
the screen display (11) comprises at least one status line (27).

16. Device for controlling a screen display according to one of Claims 11 to 15,
**characterized in that**
the flexible display region (17) of the screen display (11) is designed for menu prompting in such a way that in its switched-on state the screen display (11) is reset to the initial state if there are warning messages.

17. Device for controlling a screen display according to one of Claims 1 to 16, **characterized in that**
the flexible display region (17) of the screen display (11) is designed for menu
prompting in such a way that in its switched-on state the screen display (11) is reset into the initial state if the menu prompting is in a menu level and if there has been no input for a predeterminable time.

18. Device for controlling a screen display according to one of Claims 1 to 17,
**characterized in that**
the screen (10) comprises a screen display (11) which can be reflected.

19. Device for controlling a screen display according to Claim 18,
**characterized in that**
the screen display (11) which can be reflected comprises a semitranslucent, transmissive and/or reflective controllable mirror (24).

20. Device for controlling a screen display according to Claim 18,
**characterized in that**
the screen display (11) which can be reflected comprises a fixed mirror which constitutes the fixed display region (16), and a controllable mirror which reflects the flexible display region (17) into the field of vision of the operator.

21. Device for controlling a screen display according to one of Claims 1 to 20,
**characterized in that**
the screen display (11) is embodied as a transmission display which is arranged in front of the analog instruments (15).

22. Device for controlling a screen display according to Claim 21,
**characterized in that**
an electrochromatic mirror is provided for covering parts of the analog instruments (15).

23. Device for controlling a screen display according to Claim 21,
**characterized in that**
a mechanical shutter is provided for covering parts of the analog instruments (15).

## Revendications

1. Dispositif pour commander un affichage d'écran (11), notamment pour un véhicule automobile, destiné à sélectionner des lignes de menu (12), comprenant des moyens (13) de confirmation vocale et des moyens (14) de confirmation manuelle et comprenant au moins un écran (10) avec une zone d'instruments analogiques (15) et avec un affichage d'écran (11) pour le guidage par menu, l'affichage d'écran (11) pour le guidage par menu pouvant être commandé avec les moyens (13) de confirmation vocale et/ou les moyens (14) de confirmation manuelle, **caractérisé en ce que** l'affichage d'écran (11) comprend dans le champ de vision primaire et secondaire un affichage partiel séparé pour le guidage par menu et recouvrant au moins partiellement la zone d'instruments analogiques (15), les affichages partiels séparés étant constitués d'une zone d'affichage fixe (16) et d'une zone d'affichage souple (17), et que les moyens (13) de confirmation vocale sont configurés de telle sorte que les lignes de menu (12) du menu forment en même les mots-clés pour le processeur vocal.

2. Dispositif pour commander un affichage d'écran selon la revendication 1, **caractérisé en ce que** la zone d'affichage fixe (16) de l'affichage d'écran (11) pour le guidage par menu est disposée dans la zone centrale de l'écran (10), notamment entre le tachymètre (18) et le compte-tours (29).

3. Dispositif pour commander un affichage d'écran selon la revendication 2, **caractérisé en ce que** le niveau du menu principal, avant la sélection d'une ligne de menu (12), est disposé dans la zone d'affichage fixe (16) de l'affichage d'écran (11) pour le guidage par menu, notamment entre le tachymètre (18) et le compte-tours (29).

4. Dispositif pour commander un affichage d'écran selon l'une des revendications 1 à 3, **caractérisé en ce que** l'affichage d'écran (11) pour le guidage par menu présente un marquage d'écran (19) qui met en valeur les lignes de menu individuelles (12).

5. Dispositif pour commander un affichage d'écran selon l'une des revendications 1 à 4, **caractérisé en ce que** les moyens (14) de commande manuelle de l'affichage d'écran (11) sont formés par un codeur de position mécanique (20).

6. Dispositif pour commander un affichage d'écran selon la revendication 5, **caractérisé en ce que** le codeur de position mécanique (20) est monté sur le volant du véhicule, notamment du véhicule automobile.

7. Dispositif pour commander un affichage d'écran selon la revendication 5 ou 6, **caractérisé en ce que** le codeur de position mécanique (20) est configuré pour exécuter les fonctions « Menu principal, Confirmation, Menu précédent, Marquage d'écran vers le haut, Marquage d'écran vers le bas ».

8. Dispositif pour commander un affichage d'écran selon l'une des revendications 5 à 7, **caractérisé en ce que** le codeur de position mécanique (20) comprend une roue de commande rotative (21) pour commander l'affichage d'écran (11).

9. Dispositif pour commander un affichage d'écran selon l'une des revendications 5 à 8, **caractérisé en ce que** le codeur de position mécanique (20) est configuré pour pouvoir être déplacé vers le haut ou vers le bas pour déplacer le marquage d'écran (19).

10. Dispositif pour commander un affichage d'écran selon l'une des revendications 1 à 9, **caractérisé en ce que** les moyens (13) de confirmation vocale sont configurés de telle sorte que dans le cas où toutes les lignes de menu (12) n'apparaissent pas entièrement sur l'affichage d'écran (11), les lignes de menu (12) peuvent être modifiées par une simple commande vocale (par exemple « monter / descendre »).

11. Dispositif pour commander un affichage d'écran selon l'une des revendications 1 à 10, **caractérisé en ce que** la position du marquage d'écran (19) sur l'affichage d'écran (11) n'est pas modifiable, de sorte que les lignes de menu individuelles (12) sont déplacées sous le marquage d'écran (19).

12. Dispositif pour commander un affichage d'écran selon l'une des revendications 1 à 10, **caractérisé en ce que** la position du marquage d'écran (19) sur l'affichage d'écran (11) est modifiable de telle sorte que le marquage d'écran (19) passe au-dessus des lignes de menu individuelles (12) de manière mobile.

13. Dispositif pour commander un affichage d'écran selon l'une des revendications 1 à 12, **caractérisé en ce que** l'affichage d'écran (11) est constitué d'affichages individuels de chacun des niveaux de menu indépendants les uns des autres.

14. Dispositif pour commander un affichage d'écran selon l'une des revendications 1 à 13, **caractérisé en ce que** la zone d'affichage souple (17) de l'affichage d'écran (11) pour le guidage par menu est configurée de telle sorte que le recouvrement partiel des instruments analogiques (15) n'a pas lieu dans leur zone extérieure de sorte que le bord extérieur de la graduation (22) et la pointe de l'aiguille indicatrice (23), par exemple, sont encore visibles et, par conséquent, les valeurs mesurées peuvent encore être lues malgré le recouvrement.

15. Dispositif pour commander un affichage d'écran selon l'une des revendications 1 à 14, **caractérisé en ce que** l'affichage d'écran (11) comprend au moins une ligne d'état (27).

16. Dispositif pour commander un affichage d'écran selon l'une des revendications 11 à 15, **caractérisé en ce que** la zone d'affichage souple (17) de l'affichage d'écran (11) pour le guidage par menu est configurée de telle sorte que lorsqu'elle est activée, des messages d'avertissement de l'affichage d'écran (11) la ramènent dans son état initial.

17. Dispositif pour commander un affichage d'écran selon l'une des revendications 1 à 16, **caractérisé en ce que** la zone d'affichage souple (17) de l'affichage d'écran (11) pour le guidage par menu est configurée de telle sorte que lorsqu'elle est activée, lorsque le guidage par menu se trouve dans un niveau de menu, l'affichage d'écran (11) est ramené en l'état initial si aucune saisie n'a lieu pendant une période prolongée.

18. Dispositif pour commander un affichage d'écran selon l'une des revendications 1 à 17, **caractérisé en ce que** l'écran (10) comprend un affichage d'écran (11) pouvant être réfléchi.

19. Dispositif pour commander un affichage d'écran selon la revendication 18, **caractérisé en ce que** l'affichage d'écran (11) pouvant être réfléchi comprend un miroir (24) semi-transparent pouvant être rendu transmissif et/ou réfléchissant.

20. Dispositif pour commander un affichage d'écran selon la revendication 18, **caractérisé en ce que** l'affichage d'écran (11) pouvant être réfléchi comprend un miroir fixe représentant la zone d'affichage fixe (16) et un miroir commandable qui réfléchit la zone d'affichage souple (17) dans le champ de vision de l'opérateur.

21. Dispositif pour commander un affichage d'écran selon l'une des revendications 1 à 20, **caractérisé en ce que** l'affichage d'écran (11) est réalisé sous la forme d'un écran à transmission disposé devant les instruments analogiques (15).

22. Dispositif pour commander un affichage d'écran selon la revendication 21, **caractérisé en ce qu'**un miroir électrochromatique est prévu pour recouvrir des parties des instruments analogiques (15).

23. Dispositif pour commander un affichage d'écran selon la revendication 21, **caractérisé en ce qu'**un obturateur mécanique est prévu pour recouvrir des parties des instruments analogiques (15).
